# EUROPEAN PATENT APPLICATION

(11) **EP 4 818 119 A1**
(43) Date of publication of application: **07.10.2026**
(21) Application number: 25880137.2
(22) Date of filing: 25.07.2025
(51) Int. Cl.: C01B 32/17

(54) **METHOD FOR PURIFYING CARBON NANOTUBE**

(30) Priority: 14.10.2024 KR 20240139827
(71) Applicant: LG Chem, Ltd., Seoul 07336 (KR)
(72) Inventor: SUNG, Min Chang, Seoul 07796 (KR); KIM, Yong Jin, Seoul 07796 (KR)
(74) Representative: Vossius & Partner Patentanwälte Rechtsanwälte mbB
(86) International application number: PCT/KR2025/011108
(87) International publication number: WO 2026/084197

(57) **Abstract**

Provided is a method for purifying carbon nanotubes including: in the purification of unpurified carbon nanotubes including 50 wt% to 95 wt% of metal oxides as impurities, adding the unpurified carbon nanotubes to a purification furnace to perform first heating of the unpurified carbon nanotubes under an inert gas atmosphere, and supplying an organic chlorine compound to the purification furnace to perform a reaction, thereby chlorinating the metal oxides to produce metal chlorides; and performing second heating of the carbon nanotubes including the metal chlorides at a temperature higher than a first heating temperature in the purification furnace to vaporize the metal chlorides , thereby obtaining purified carbon nanotubes.

## Description

### [Technical Field]

### CROSS-REFERENCE TO RELATED APPLICATIONS

The present application claims the benefit of priority to Korean Patent Application No. 10-2024-0139827, filed on October 14, 2024, the entire contents of which are incorporated herein as a part of the specification.

### Technical Field

The present disclosure relates to a method for purifying carbon nanotubes, and more particularly, to a method for purifying high-purity carbon nanotubes in a high yield from unpurified carbon nanotubes including a high-content of metal oxides as impurities.

### [Background Art]

Carbon nanotubes (CNT) are currently expected to be applied to various modern industrial fields, based on excellent characteristics such as mechanical strength, chemical stability, thermal conductivity, and electrical conductivity.

Meanwhile, when a specific grade of carbon nanotubes (CNT) is manufactured, a metal oxide such as an aluminum-based oxide (Al₂O₃) and a magnesium-based oxide (MgO) is used as a catalyst support, and since the boiling point of the metal oxide is higher than the reaction temperature during manufacture of the carbon nanotubes by about 200°C or higher, a large amount of metal oxides remains in the manufactured carbon nanotubes as impurities. The impurities of metal components such as metal oxides cause problems such as lowering conductivity of carbon nanotubes or accelerating decomposition of an organic solvent. In particular, carbon nanotubes synthesized with a low purity includes 50 wt% or more of the metal oxide, which need to be removed.

Thus, conventionally, in order to remove impurities of a metal component included in low-purity carbon nanotubes, a method of applying high vacuum in a state of a ultra-high temperature at or above a boiling point of the metal oxide to vaporize impurities, dissolving metal component impurities into a liquid phase using a heated strong acid, for example, nitric acid, hydrochloric acid, and the like, or reacting a halogen-containing gas and a metal oxide to convert them into a halogenated metal, which is vaporized and removed, is being used.

However, when purifying CNT including a large amount of impurities of metal components such as an aluminum-based oxide or a magnesium-based oxide used as a catalyst support, a problem in which oxygen produced by substituting the metal oxide and halogen reacts with CNT and burns is caused, which rapidly lowers the yield of CNT. In particular, when the metal oxide is present in an excessive amount as compared with CNT before purification, CNT is all lost due to a large amount of oxygen produced during a purification process.

Thus, the development of a process capable of purifying unpurified low-purity carbon nanotubes containing a large amount of the metal oxides as impurities in a high purity and with a high yield is needed.

### [Disclosure]

### [Technical Problem]

In order to solve the problems mentioned in the Background Art, an object of the present disclosure is to provide a method for purifying CNT, which may increase the yield and purity of purified carbon nanotubes, by minimizing consumption of carbon nanotubes during purification of unpurified carbon nanotubes including a high-content of metal oxides as impurities.

However, the object to be solved in the present disclosure is not limited to the object mentioned above, and other objects which are not mentioned may be clearly understood by a person skilled in the art from the following descriptions.

### [Technical Solution]

In one general aspect, a method for purifying carbon nanotubes is provided, wherein the carbon nanotubes are unpurified carbon nanotubes including 50 wt% to 95 wt% of metal oxides as impurities, the method including: adding the unpurified carbon nanotubes to a purification furnace to perform first heating of the unpurified carbon nanotubes under an inert gas atmosphere, and supplying an organic chlorine compound represented by the following Chemical Formula 1 to the purification furnace to perform a reaction, thereby chlorinating the metal oxides to produce metal chlorides; and performing second heating of the carbon nanotubes including the metal chlorides at a temperature higher than a first heating temperature in the purification furnace to vaporize the metal chlorides, thereby obtaining purified carbon nanotubes:

[Chemical Formula 1] CₓH_{y}Cl_{z}A_{w}Oᵥ

wherein x and z are each independently an integer more than 0, x/z is 0.5 or more, y is an integer of 0 to 8, A is a halogen atom selected from fluorine, bromine, and iodine, and w and v are each independently an integer of 0 or 1.

### [Advantageous Effects]

According to the method for purifying carbon nanotubes of the present disclosure, CNT purity may be increased by removing metal oxides as impurities, and simultaneously, a CNT yield may be increased by minimizing CNT loss.

An effect which may be obtained in the present disclosure is not limited to the effects mentioned above, and other effects which are not mentioned will be understood clearly by a person with ordinary skill in the art to which the present disclosure pertains from the following description.

### [Description of Drawings]

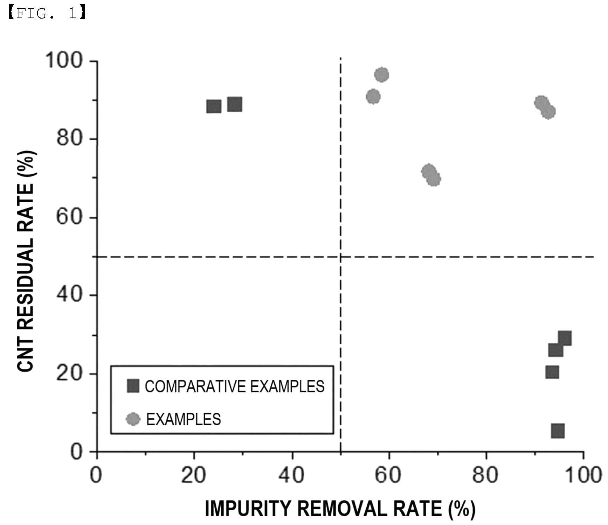

FIG. 1 is a graph in which an impurity removal rate and a CNT residual rate during CNT purification by the methods according to the examples and the comparative examples are compared.

### [Best Mode]

The terms and words used in the description and claims of the present disclosure are not to be construed limitedly as having general or dictionary meanings but are to be construed as having meanings and concepts meeting the technical ideas of the present disclosure, based on a principle that the inventors are able to appropriately define the concepts of terms in order to describe their own disclosure in the best mode.

Regarding description of the drawings, similar reference numerals may be used for similar or related constituent elements.

A singular form of a noun corresponding to an item may include one or a plurality of items, unless otherwise explicitly stated in the relevant context.

In the present disclosure, each of the phrases such as "A or B", "at least one or A and B", "at least one of A or B", "A, B, or C", "at least one of A, B, and C", and "at least one of A, B, or C" may include any one of the items listed together with the corresponding phrase of the phrases or all possible combinations of them.

The term "and/or" includes a combination of a plurality of described related constituent elements or any one of a plurality of described related constituent elements.

The terms such as "1st" or "2nd", or "first" or "second" may be simply used for distinguishing a corresponding constituent element from other corresponding constituent elements, and the corresponding constituent elements are not limited in other aspects (e.g.: importance or order).

In addition, the terms such as "front surface", "back surface", "upper surface", "lower surface", "side surface", "left", "right", "upper", and "lower" used in the present disclosure are defined based on drawings, and the shape and position of each constituent element are not limited by the terms.

The terms such as "comprises" or "have" are intended to specify the presence of stated features, steps, operations, constituent elements, parts, or a combination thereof, but do not preclude the presence or addition of one or more other features, numerals, steps, operations, constituent elements, parts, or a combination thereof.

When it is described that a constituent element is "connected to", "combined with", "supported on", or "in contact with" other constituent elements, it includes not only the case in which the constituent elements are directly connected, combined, supported, or in contact, but also the case in which they are indirectly connected, combined, supported, or in contact through a third constituent element.

When it is described that a constituent element is positioned "on" other constituent element, it includes not only the case in which the constituent element is in contact with another constituent element, but also the case in which another constituent element is present between the two constituent elements.

In addition, when unique manufacture and material tolerances are suggested in the mentioned meaning, the terms such as "about" and "substantially" used in the present disclosure are used in the meaning of the numerical value or in the meaning close to the numerical value, and are used for preventing the disclosure mentioning a correct or absolute numerical value for better understanding of the present disclosure from being unfairly used by an unconscionable infringer.

The term "fluid" used in the present disclosure may include any one or more components of a gas, a liquid, and a solid.

"Pressure" mentioned in the present disclosure refers to a gauge pressure measured based on atmospheric pressure.

A method for purifying carbon nanotubes according to the present disclosure includes: in the purification of unpurified carbon nanotubes including 50 wt% to 95 wt% of metal oxides as impurities, (S1) adding the unpurified carbon nanotubes to a purification furnace to perform first heating of the unpurified carbon nanotubes under an inert gas atmosphere, and supplying an organic chlorine compound to the purification furnace to perform a reaction, thereby chlorinating the metal oxide to produce a metal chloride; and (S2) performing second heating of the carbon nanotubes including the metal chloride at a temperature higher than a first heating temperature in the purification furnace to vaporize the metal chloride and obtaining purified carbon nanotubes.

The unpurified carbon nanotubes according to the present disclosure may be manufactured by growing carbon nanotubes through decomposition of a carbon source using a catalyst support, and a metal catalyst supported on the catalyst support may be a material which promotes growth of carbon nanotubes. As a supported catalyst, alumina or magnesium oxide (MgO) on which Fe, Co, Ni, Mo, and the like are supported may be mainly used.

The unpurified carbon nanotubes include a catalyst support such as a metal oxide used when synthesizing CNT as an impurity and may be carbon nanotubes synthesized in a low purity. The low-purity carbon nanotubes may mean that the content of metal oxides which are impurities is higher than the content of CNT. For example, the unpurified carbon nanotubes may include 50 wt% or more of the metal oxides as the impurities with respect to the total weight of the unpurified carbon nanotubes. For example, the content of the metal oxide with respect to the total weight of the unpurified carbon nanotubes may be 50 wt% to 95 wt%, 60 wt% to 95 wt%, 70 wt% to 95 wt%, or 80 wt% to 95 wt%.

The method for purifying carbon nanotubes according to the present disclosure may be a method which is particularly effective for low-purity unpurified carbon nanotubes including 50 wt% or more of the metal oxides as impurities. In the present disclosure, the low-purity carbon nanotubes and/or the unpurified carbon nanotubes may refer to carbon nanotubes having a CNT purity of less than 50%, preferably less than 30%, and most preferably less than 15%.

The metal oxide may include those selected from MgO, CoO, Co₃O₄, Li₂O, Na₂O, K₂O, Al₂O₃, MoO₃, Fe₂O₃, Fe₃O₄, FeO, and a combination thereof, preferably may include MgO, CoO, Co₃O₄, Li₂O, Na₂O, or K₂O, and more preferably may be MgO.

The method for purifying carbon nanotubes according to an exemplary embodiment of the present disclosure includes: performing first heating of the unpurified carbon nanotubes under an inert gas atmosphere, and supplying an organic chlorine compound represented by the following Chemical Formula 1 to perform a reaction to chlorinate the metal oxide to produce a metal chloride (S1):

[Chemical Formula 1] CₓH_{y}Cl_{z}A_{w}Oᵥ

wherein x and z are independently of each other an integer more than 0, x/z is 0.5 or more, and y is an integer of 0 to 8. Specifically, x may be an integer of more than 0 and 5 or less, and z may be an integer of more than 0 and 8 or less. In addition, A may be a halogen atom selected from fluorine (F), bromine (Br), and iodine (I), and w and v may be independently of each other an integer of 0 or 1.

Herein, by purifying CNT using the organic chlorine compound in which x/z is 0.5 or more, that is, a C/Cl ratio is 0.5 or more, when a chlorine atom of an organic chlorine compound reacts with a metal atom of the metal oxide, a carbon atom of the organic chlorine compound may be consumed instead of CNT.

Specifically, when the metal chloride is produced by the reaction between the metal oxide and the organic chlorine compound, the oxygen atom of the metal oxide and the carbon atom of the organic chlorine compound react to produce carbon dioxide (CO₂), as shown in the following Reaction Formula 1:
[Reaction Formula 1]

unpurified CNT (CNT + metal oxide) + organic chlorine compound → CNT + metal chloride + CO₂ (g)

When the metal oxide and the organic chlorine compound react, oxygen (O₂) is produced as the metal oxide is chlorinated, and at this time, when a C/Cl ratio of the organic chlorine compound is 0.5 or more, the carbon atom of the organic chlorine compound may react with oxygen of the metal oxide instead of CNT and may provide a sufficient amount of carbon to be oxidized, and thus, CNT is not consumed by the oxygen and the yield of CNT may be increased. However, when the C/Cl ratio is less than 0.5, the carbon atom is insufficient as compared with the metal oxide to cause a chlorination reaction and a CNT consumption amount is increased, thereby reducing a CNT yield.

For example, the organic chlorine compound represented by Chemical Formula 1 may be tetrachloroethylene (C₂Cl₄), 1,1,2,2-tetrachloroethane (C₂H₂Cl₄), 1,1,1,2-tetrachloroethane (C₂H₂Cl₄), 1-chloropropane (C₃H₇Cl), dichloroacetylene (C₂Cl₂), hexachloropropene (C₃Cl₆), tetrachlorocyclopropene (C₃Cl₄), octachlorocyclobutane (C₄Cl₈), perchlorobutene (C₄Cl₈), hexachlorobutadiene (C₄Cl₆), tetrachlorobutatriene (C₄Cl₄), dichlorobutadiyne (C₄Cl₂), perchlorocyclopentane (C₅Cl₁₀), octachlorocyclopentene (C₅Cl₈), hexachlorocyclopentadiene (C₅Cl₆), 2-bromo-1-chloropropane (C₃H₆BrCl), bromoacetyl chloride (BrCH₂COCl), and the like, but is not limited thereto.

Meanwhile, the inert gas may include gas containing nitrogen (N₂), helium (He), neon (Ne), argon (Ar), krypton (Kr), xenon (Xe), radon (Rn), or a mixed component thereof, and specifically, may use a nitrogen gas. Since the inert gas is chemically very stable and has a characteristic of not donating or accepting electrons or sharing electrons, it may serve to fluidize and move CNT due to inflow of gas without a reaction with CNT.

According to an exemplary embodiment, the first heating temperature of the unpurified CNT is determined considering the decomposition behavior of the organic chlorine compound by temperature, and the first heating may be performed by heating from room temperature (for example, 15°C to 25°C) to the decomposition temperature of the organic chlorine compound, for example, a temperature in a range of 550°C to 800°C, preferably 600°C to 750°C, and more preferably 650°C to 700°C.

Herein, when the metal chloride melts, a chlorination reaction may be inhibited, and thus, the first heating temperature may be preferably a temperature lower than the melting point of the metal chloride. For example, the first heating temperature may be in a range of -50°C to -20°C, preferably -45°C to -30°C, and more preferably -45°C to - 35°C, based on the melting point of the metal chloride. Since the chlorination reaction is an exothermic reaction, the temperature rises above the set temperature during the reaction, and thus, in order to prevent melting of the metal chloride, the temperature range needs to be satisfied during the first heating.

For example, the chlorination reaction of the metal oxide may be performed by heating to 550°C to 800°C, specifically 600°C to 750°C, and more specifically 650°C to 700°C at a rate of 5°C/min to 50°C/min, specifically 5°C/min to 40°C/min, and more specifically 5°C/min to 30°C/min by the first heating.

When the heating rate is too low during the first heating, a purification time may be extended. However, when the heating rate is too high, the temperature reaches an oxidation temperature before completely removing moisture or oxygen from a CNT sample and CNT may be damaged, and also, thermal shock may be caused in the purification furnace (for example, graphite, quartz, or the like) in which a purification process is performed, which may cause a problem in terms of equipment maintenance.

In addition, when the first heating temperature range is satisfied, appropriate energy may be supplied before performing the chlorination reaction of the metal oxide. Specifically, when the first heating temperature is too low, the reaction rate is too low or the reaction may not occur, and when the first heating temperature is too high, it is difficult to transfer the carbon of the organic chloride to impurities due to rapid decomposition of the organic chlorine compound in the process of the chlorination process of the metal oxide, and thus, CNT consumption becomes severe or the metal chloride is melted to prevent further chlorination, thereby reducing an impurity removal rate.

In an exemplary embodiment, the organic chlorine compound may be supplied to the purification furnace in a gas or liquid phase. For example, when the organic chlorine compound is a gas phase, the organic chlorine compound at a flow rate of 0.1 times to 10 times, preferably 0.5 times to 5 times the internal volume of the purification furnace per minute (min) may be supplied to the purification furnace. As another example, when the organic chlorine compound is a liquid phase, the organic chlorine compound at a flow rate of 0.0001 times to 0.01 times, preferably 0.0005 times to 0.005 times the internal volume of the purification furnace per minute (min) may be supplied to the purification furnace.

When the supply flow rate of the organic chlorine compound is too low, a time for impurities to be removed from CNT is extended, and the impurities are deposited in an exhaust line to cause pipe blockage, and when the supply flow rate of the organic chlorine compound is too high, only the consumption amount of the organic chlorine compound is increased without improvement of purification efficiency.

In addition, the chlorination reaction of the metal oxide may be performed for 10 minutes to 200 minutes, preferably 15 minutes to 150 minutes, and more preferably 30 minutes to 90 minutes. When the reaction time is too short, impurities are not sufficiently removed, so that the purity of CNT may not be secured, and when the reaction time is too long, CNT is lost to reduce a CNT residual rate.

In the method for purifying carbon nanotubes according to an exemplary embodiment of the present disclosure, the carbon nanotubes including the metal chloride are secondarily heated at a temperature higher than the first heating temperature to vaporize the metal chloride and obtain purified carbon nanotubes (S2).

According to an exemplary embodiment, the second heating may be heating from the first heating temperature to a temperature higher than the melting point of the metal chloride, preferably a temperature close to the boiling point of the metal chloride. For example, the second heating temperature may be within 10°C above or below, 20°C above or below, or 30°C above or below, based on the boiling point of the metal chloride, but is not limited thereto. When the second heating temperature is too high, unnecessary energy usage is increased, and when the second heating temperature is too low, the metal chloride may not be removed.

For example, the metal chloride may be removed by vaporization, by heating to higher than 800°C and 1,500°C or lower, specifically 1,000°C to 1,500°C, and more specifically 1,200°C to 1,500°C at a rate of 5°C/min to 50°C/min, specifically 5°C/min to 40°C/min, and more specifically 5°C/min to 30°C/min by the second heating.

In the first heating process, the chlorination reaction is performed at a relatively low temperature, thereby delaying the decomposition of the organic chlorine compound so that the carbon atom may be sufficiently transferred to the impurities inside unpurified CNT, and the second heating process is performed at a relatively high temperature, thereby removing the metal chloride by vaporization. Herein, the metal oxide is modified with the metal chloride by the chlorination reaction in the first heating process, thereby lowering the boiling point, and thus, the metal chloride may be removed by vaporization under relatively mild conditions during the second heating.

Meanwhile, after the second heating, if necessary, inert gas may be further supplied to terminate the reaction. Herein, the inert gas may include gas containing nitrogen (N₂), helium (He), neon (Ne), argon (Ar), krypton (Kr), xenon (Xe), radon (Rn), or a mixed component thereof, and specifically, may use a nitrogen gas. In addition, the supply of the inert gas may be performed for 10 minutes to 200 minutes, preferably 15 minutes to 150 minutes, and more preferably 30 minutes to 120 minutes. When the supply time is too short, the metal chloride may not be sufficiently removed, and when the supply time is too long, purification costs may be increased due to the increase in the process time and the inert gas usage.

Meanwhile, the impurity removal rate of the purified carbon nanotubes obtained in the method for purifying carbon nanotubes according to the present disclosure may be 50 wt% or more, preferably 60 wt% or more, and more preferably 90 wt% or more, based on the total weight of the impurities in unpurified CNT. The higher impurity removal rate means the higher purity of purified CNT. In addition, the residual rate of the purified carbon nanotubes may be 50 wt% or more, preferably 65 wt% or more, and more preferably 85 wt% or more, based on the total weight of CNT in the unpurified CNT. The higher CNT residual rate means the higher yield of the purified CNT.

Hereinabove, the method for purifying carbon nanotubes according to the present disclosure has been described and illustrated in the drawings, but the description and the illustration in the drawings are the description and the illustration of only core constitutions for understanding of the present disclosure, and in addition to the process and apparatus described above and illustrated in the drawings, the process and the apparatus which are not described and illustrated separately may be appropriately applied and used for carrying out the method for purifying carbon nanotubes according to the present disclosure.

Hereinafter, the present disclosure will be described in detail through the following examples. However, the following examples are intended to describe the present disclosure in more detail, and the scope of the present disclosure is not limited to the following examples.

### [Examples]

### Comparative Example 1

About 10 g of synthetic CNT including 90 wt% of magnesium oxide (MgO) as an impurity was added to a purification furnace having an internal volume of 2 L, purging was performed with nitrogen (N₂) for 5 minutes, and then heating to 670°C was performed at a heating rate of 10°C/min. Subsequently, liquid carbon tetrachloride (CCl₄) at 2 mL/min was supplied to the purification furnace for about 30 seconds using a gear pump and then left to stand for 30 minutes. Then, after purging with nitrogen (N₂) gas for 30 minutes, the process was finished.

### Comparative Example 2

About 10 g of synthetic CNT including 90 wt% of magnesium oxide (MgO) as an impurity was added to a purification furnace having an internal volume of 2 L, purging was performed with nitrogen (N₂) for 5 minutes, and then heating to 1,400°C was performed at a heating rate of 10°C/min. Subsequently, liquid carbon tetrachloride (CCl₄) at 2 mL/min was supplied to the purification furnace for about 30 seconds using a gear pump and then left to stand for 30 minutes. Then, after purging with nitrogen (N₂) gas for 30 minutes, the process was finished.

### Comparative Example 3

About 10 g of synthetic CNT including 90 wt% of magnesium oxide (MgO) as an impurity was added to a purification furnace having an internal volume of 2 L, purging was performed with nitrogen (N₂) for 5 minutes, and then first heating to 670°C was performed at a heating rate of 10°C/min. Subsequently, liquid carbon tetrachloride (CCl₄) at 2 mL/min was supplied to the purification furnace for about 30 seconds using a gear pump and then left to stand for 30 minutes.

Thereafter, second heating to 1,400°C was performed at a heating rate of 10°C/min, and after purging with nitrogen (N₂) gas for 30 minutes, the process was finished.

### Comparative Example 4

About 10 g of synthetic CNT including 90 wt% of magnesium oxide (MgO) as an impurity was added to a purification furnace having an internal volume of 2 L, purging was performed with nitrogen (N₂) for 5 minutes, and then heating to 670°C was performed at a heating rate of 10°C/min. Subsequently, liquid tetrachloroethylene (C₂Cl₄) at 2 mL/min was supplied to the purification furnace for about 30 seconds using a gear pump and then left to stand for 30 minutes. Then, after purging with nitrogen (N₂) gas for 30 minutes, the process was finished.

### Comparative Example 5

About 10 g of synthetic CNT including 90 wt% of magnesium oxide (MgO) as an impurity was added to a purification furnace having an internal volume of 2 L, purging was performed with nitrogen (N₂) for 5 minutes, and then heating to 1,400°C was performed at a heating rate of 10°C/min. Subsequently, liquid tetrachloroethylene (C₂Cl₄) at 2 mL/min was supplied to the purification furnace for about 30 seconds using a gear pump and then left to stand for 30 minutes. Then, after purging with nitrogen (N₂) gas for 30 minutes, the process was finished.

### Example 1

About 10 g of synthetic CNT including 90 wt% of magnesium oxide (MgO) as an impurity was added to a purification furnace having an internal volume of 2 L, purging was performed with nitrogen (N₂) gas for 5 minutes, and then first heating to 550°C was performed at a heating rate of 10°C/min. Subsequently, liquid tetrachloroethylene (C₂Cl₄) at 2 mL/min was supplied to the purification furnace for about 30 seconds using a gear pump and then left to stand for 30 minutes.

Thereafter, the purification furnace was secondarily heated to 1,400°C at a heating rate of 10°C/min, and after purging with nitrogen (N₂) gas for 30 minutes, the process was finished.

### Example 2

About 10 g of synthetic CNT including 90 wt% of magnesium oxide (MgO) as an impurity was added to a purification furnace having an internal volume of 2 L, purging was performed with nitrogen (N₂) gas for 5 minutes, and then first heating to 670°C was performed at a heating rate of 10°C/min. Subsequently, liquid tetrachloroethylene (C₂Cl₄) at 2 mL/min was supplied to the purification furnace for about 30 seconds using a gear pump and then left to stand for 30 minutes.

Thereafter, second heating to 1,400°C was performed at a heating rate of 10°C/min, and after purging with nitrogen (N₂) gas for 30 minutes, the process was finished.

### Example 3

About 10 g of synthetic CNT including 90 wt% of magnesium oxide (MgO) as an impurity was added to a purification furnace having an internal volume of 2 L, purging was performed with nitrogen (N₂) gas for 5 minutes, and then first heating to 800°C was performed at a heating rate of 10°C/min. Subsequently, liquid tetrachloroethylene (C₂Cl₄) at 2 mL/min was supplied to the purification furnace for about 30 seconds using a gear pump and then left to stand for 30 minutes.

Thereafter, second heating to 1,400°C was performed at a heating rate of 10°C/min, and after purging with nitrogen (N₂) gas for 30 minutes, the process was finished.

### Comparative Example 6

About 10 g of synthetic CNT including 90 wt% of magnesium oxide (MgO) as an impurity was added to a purification furnace having an internal volume of 2 L, purging was performed with nitrogen (N₂) for 5 minutes, and then heating to 670°C was performed at a heating rate of 10°C/min. Subsequently, liquid 1,1,2,2-tetrachloroethane (C₂H₂Cl₄) at 2 mL/min was supplied to the purification furnace for about 30 seconds using a gear pump and then left to stand for 30 minutes. Then, after purging with nitrogen (N₂) gas for 30 minutes, the process was finished.

### Comparative Example 7

About 10 g of synthetic CNT including 90 wt% of magnesium oxide (MgO) as an impurity was added to a purification furnace having an internal volume of 2 L, purging was performed with nitrogen (N₂) for 5 minutes, and then heating to 1,400°C was performed at a heating rate of 10°C/min. Subsequently, liquid 1,1,2,2-tetrachloroethane (C₂H₂Cl₄) at 2 mL/min was supplied to the purification furnace for about 30 seconds using a gear pump and then left to stand for 30 minutes. Then, after purging with nitrogen (N₂) gas for 30 minutes, the process was finished.

### Example 4

About 10 g of synthetic CNT including 90 wt% of magnesium oxide (MgO) as an impurity was added to a purification furnace having an internal volume of 2 L, purging was performed with nitrogen (N₂) gas for 5 minutes, and then first heating to 550°C was performed at a heating rate of 10°C/min. Subsequently, liquid 1,1,2,2-tetrachloroethane (C₂H₂Cl₄) at 2 mL/min was supplied to the purification furnace for about 30 seconds using a gear pump and then left to stand for 30 minutes.

Thereafter, second heating to 1,400°C was performed at a heating rate of 10°C/min, and after purging with nitrogen (N₂) gas for 30 minutes, the process was finished.

### Example 5

About 10 g of synthetic CNT including 90 wt% of magnesium oxide (MgO) as an impurity was added to a purification furnace having an internal volume of 2 L, purging was performed with nitrogen (N₂) gas for 5 minutes, and then first heating to 670°C was performed at a heating rate of 10°C/min. Subsequently, liquid 1,1,2,2-tetrachloroethane (C₂H₂Cl₄) at 2 mL/min was supplied to the purification furnace for about 30 seconds using a gear pump and then left to stand for 30 minutes.

Thereafter, second heating to 1,400°C was performed at a heating rate of 10°C/min, and after purging with nitrogen (N₂) gas for 30 minutes, the process was finished.

### Example 6

About 10 g of synthetic CNT including 90 wt% of magnesium oxide (MgO) as an impurity was added to a purification furnace having an internal volume of 2 L, purging was performed with nitrogen (N₂) gas for 5 minutes, and then first heating to 800°C was performed at a heating rate of 10°C/min. Subsequently, liquid 1,1,2,2-tetrachloroethane (C₂H₂Cl₄) at 2 mL/min was supplied to the purification furnace for about 30 seconds using a gear pump and then left to stand for 30 minutes.

Thereafter, second heating to 1,400°C was performed at a heating rate of 10°C/min, and after purging with nitrogen (N₂) gas for 30 minutes, the process was finished.

### [Experimental Example]

The purification process conditions in the examples and the comparative examples, and the impurity removal rate (%) and the CNT residual rate (%) of the purified CNT were measured and are shown in the following Table 1, and the results are shown in FIG. 1.

Herein, the impurity removal rate and the CNT residual rate were calculated by the following method: Equation (1): 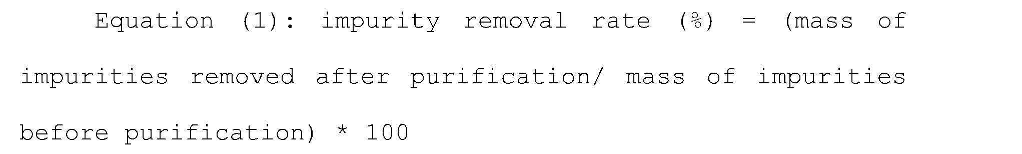 impurity removal rate (%) = (mass of impurities removed after purification/ mass of impurities before purification) * 100 Equation (2): 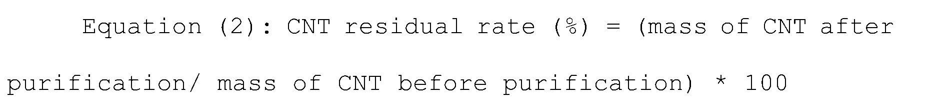 CNT residual rate (%) = (mass of CNT after purification/ mass of CNT before purification) * 100

Specifically, the upper limits of the impurity removal rate according to Equation (1) and the CNT residual rate according to Equation (2) were 100%, respectively, and for example, the higher impurity removal rate means more removal of impurities and a higher CNT purity, and the higher the CNT residual rate, the less the CNT consumption in the purification process, which means the higher CNT yield.

**[Table 1]**

| | Organic chlorine compound | | Heating temperature (°C) | | Impurity removal rate (%) | CNT residual rate (%) |
|---|---|---|---|---|---|---|
| | Type | C/Cl ratio | First | Second | | |
| Comparative Example 1 | CCl₄ | 0.25 | 670 | | 27.2 | 84.2 |
| Comparative Example 2 | CCl₄ | 0.25 | 1,400 | | 94.5 | 5.6 |
| Comparative Example 3 | CCl₄ | 0.25 | 670 | 1,400 | 93.3 | 20.7 |
| Comparative Example 4 | C2Cl₄ | 0.5 | 670 | | 28.0 | 89.0 |
| Comparative Example 5 | C2Cl₄ | 0.5 | 1,400 | | 94.0 | 26.3 |
| Example 1 | C₂Cl₄ | 0.5 | 550 | 1,400 | 56.6 | 90.9 |
| Example 2 | C₂Cl₄ | 0.5 | 670 | 1,400 | 92.5 | 87.0 |
| Example 3 | C₂Cl₄ | 0.5 | 800 | 1,400 | 69.1 | 69.8 |
| Comparative Example 6 | C₂H₂Cl₄ | 0.5 | 670 | | 23.8 | 88.4 |
| Comparative Example 7 | C₂H₂Cl₄ | 0.5 | 1,400 | | 95.8 | 29.2 |
| Example 4 | C₂H₂Cl₄ | 0.5 | 550 | 1,400 | 58.4 | 96.4 |
| Example 5 | C₂H₂Cl₄ | 0.5 | 670 | 1,400 | 91.1 | 89.3 |
| Example 6 | C2H2Cl4 | 0.5 | 800 | 1,400 | 68.2 | 71.7 |
| CCl₄: Carbon tetrachloride | | | | | | |
| C₂Cl₄: Tetrachloroethylene | | | | | | |
| C₂H₂Cl₄: 1,1,2,2-tetrachloroethane | | | | | | |

Referring to Table 1 and FIG. 1, it was confirmed that Examples 1 to 6, in which a two-step heating process was performed using the organic chlorine compound satisfying the C/Cl ratio of 0.5 or more, satisfied both conditions that the impurity removal rate and the CNT residual rate were each 50% or more.

More specifically, since Examples 1 to 3 used tetrachloroethylene as the organic chlorine compound and Examples 4 to 6 used 1,1,2,2-tetrachloroethane as the organic chlorine compound, Examples 1 to 3 and Examples 4 to 6 performed the CNT purification process only with the difference in the first heating temperature. Referring to the fact, when first heating was performed at a temperature of 670°C which is lower than the melting point of magnesium chloride (MgCl₂) (about 714°C) produced by the chlorination reaction of the metal oxide in the first heating process and close to the melting point of MgCl₂, the impurity removal rate was 91.1% or more and the CNT residual rate was 87% or more, and both the CNT purity and yield were confirmed to be excellent.

Meanwhile, in Comparative Examples 1 to 3 using the organic chlorine compound having the C/Cl ratio of less than 0.5, the impurity removal rate or CNT residual rate was decreased to 50% or less. In particular, referring to Comparative Example 3, even in the case of performing the two-step heating process according to the present disclosure, when the organic chlorine compound having the C/Cl ratio of less than 0.5 was used, the CNT residual rate was confirmed to be low at 20.7%.

In Comparative Examples 4 to 7, the same organic chlorine compound as Examples 1 to 3 or Examples 4 to 6 was used, but only one-step heating process was performed. Specifically, in Comparative Examples 4 and 6, the first heating process was performed at 670°C which is the same temperature as the first heating temperature in Examples 2 and 5 which had the best effect, but in this case, the impurity removal rate was significantly decreased to 28% or less. However, it was confirmed that Comparative Examples 5 and 7 in which the one-step heating process was performed at 1,400°C which is the same temperature as the second heating temperature in Examples 2 and 5 had the CNT residual rate decreased to 29.2% or less.

Hereinabove, the exemplary embodiments of the present disclosure have been described, but the present disclosure is not limited thereto, and those with ordinary skill in the art will understand that various changes and modification are possible within the range which is not out of the concept and the scope of the claims described later.

## Claims

1. A method for purifying carbon nanotubes,
wherein the carbon nanotubes are unpurified carbon nanotubes including 50 wt% to 95 wt% of metal oxides as impurities, the method comprising:
adding the unpurified carbon nanotubes to a purification furnace to perform first heating of the unpurified carbon nanotubes under an inert gas atmosphere, and supplying an organic chlorine compound represented by the following Chemical Formula 1 to the purification furnace to perform a reaction, thereby chlorinating the metal oxides to produce metal chlorides; and
performing second heating of the carbon nanotubes including the metal chlorides at a temperature higher than a first heating temperature in the purification furnace to vaporize the metal chlorides, thereby obtaining purified carbon nanotubes:
[Chemical Formula 1] CₓH_{y}Cl_{z}A_{w}Oᵥ
wherein
x and z are each independently an integer more than 0, x/z is 0.5 or more, and y is an integer of 0 to 8,
A is a halogen atom selected from fluorine, bromine, and iodine, and
w and v are each independently an integer of 0 or 1.

2. The method for purifying carbon nanotubes of claim 1, wherein the organic chlorine compound is selected from tetrachloroethylene, 1,1,2,2-tetrachloroethane, 1,1,1,2-tetrachloroethane, 1-chloropropane, dichloroacetylene, hexachloropropene, tetrachlorocyclopropene, octachlorocyclobutane, perchlorobutene, hexachlorobutadiene, tetrachlorobutatriene, dichlorobutadiyne, perchlorocyclopentane, octachlorocyclopentene, hexachlorocyclopentadiene, 2-bromo-1-chloropropane, and bromoacetyl chloride.

3. The method for purifying carbon nanotubes of claim 1, wherein when the metal chlorides are produced by the reaction between the metal oxides and the organic chlorine compound, oxygen atoms of the metal oxides and carbon atoms of the organic chlorine compound react to produce carbon dioxide.

4. The method for purifying carbon nanotubes of claim 1,
wherein the first heating is performed by heating to 550°C to 800°C, and
the second heating is performed by heating from the first heating temperature to a temperature higher than 800°C and 1,500°C or less.

5. The method for purifying carbon nanotubes of claim 4, wherein the first heating temperature is lower than a melting point of the metal chlorides.

6. The method for purifying carbon nanotubes of claim 1, wherein the first heating is performed by heating at a rate of 5°C/min to 50°C/min.

7. The method for purifying carbon nanotubes of claim 1, wherein the chlorination reaction of the metal oxides is performed for 10 minutes to 200 minutes.

8. The method for purifying carbon nanotubes of claim 1, wherein the second heating is performed by heating at a rate of 5°C/min to 50°C/min.

9. The method for purifying carbon nanotubes of claim 1, wherein the supplying of the organic chlorine compound is performed by supplying the gaseous organic chlorine compound at a flow rate of 0.1 times to 10 times an internal volume of the purification furnace per minute.

10. The method for purifying carbon nanotubes of claim 1, wherein the supplying of the organic chlorine compound is performed by supplying the liquid organic chlorine compound at a flow rate of 0.0001 times to 0.1 times an internal volume of the purification furnace per minute.

11. The method for purifying carbon nanotubes of claim 1, wherein the metal oxides include a material selected from the group consisting of MgO, CoO, Co₃O₄, Li₂O, Na₂O, K₂O, Al₂O₃, MoO₃, Fe₂O₃, Fe₃O₄, FeO, and combinations thereof.
